# EUROPEAN PATENT SPECIFICATION

(11) **EP 1 795 507 B1**
(45) Date of publication and mention of the grant of the patent: **08.09.2010**
(21) Application number: 06119658.0
(22) Date of filing: 28.08.2006
(51) Int. Cl.: C03C 8/14, C03C 8/24, C04B 35/66, H02K 1/28, H02K 15/10

(54) **Method for forming a permanent mechanical joint of surfaces by means of a non-conducting inorganic substance**
Verfahren zur Herstellung einer permanenten mechanischen Verbindung zwischen Oberflächen mittels eines nichtleitenden anorganischen Materials
Procédé pour fabriquer une jonction mécanique permanente entre des surfaces moyennant un matériau non-conducteur anorganique

(30) Priority: 08.12.2005 HU 0501142
(43) Date of publication of application: 13.06.2007
(73) Proprietor: Dutkay, György, 8000 Székesfehérvar (HU)
(72) Inventor: Dutkay, György, 8000 Székesfehérvar (HU)
(74) Representative: Szabo, Zsolt

(56) References cited:
- FR-A1- 2 605 811
- JP-A- 4 367 574
- JP-A- 5 132 367
- JP-A- 57 111 366
- US-A1- 4 090 881
- US-A1- 4 327 349
- DATABASE WPI Week 200554 Derwent Publications Ltd., London, GB; AN 2005-525989 XP002426048 & JP 2005 194120 A (SUMITOMO METAL MINING CO) 21 July 2005 (2005-07-21)
- DATABASE WPI Week 197843 Derwent Publications Ltd., London, GB; AN 1978-77444A XP002426049 & JP 53 108409 A (MATSUSHITA ELEC IND CO LTD) 21 September 1978 (1978-09-21)
- DATABASE WPI Week 197739 Derwent Publications Ltd., London, GB; AN 1977-69836Y XP002426050 & JP 52 098965 A (ALPS ELECTRIC CO LTD) 19 August 1977 (1977-08-19)
- DATABASE WPI Week 199019 Derwent Publications Ltd., London, GB; AN 1990-144488 XP002426051 & JP 02 091557 A (TOYOTA JIDOSHA KK) 30 March 1990 (1990-03-30)
- DATABASE WPI Week 200027 Derwent Publications Ltd., London, GB; AN 2000-306685 XP002426052 & JP 2000 057937 A (CANON KK) 25 February 2000 (2000-02-25)
- DATABASE WPI Week 199305 Derwent Publications Ltd., London, GB; AN 1993-041379 XP002426053 & JP 04 367574 A (SUMITOMO CEMENT CO) 18 December 1992 (1992-12-18)
- DATABASE WPI Week 199518 Derwent Publications Ltd., London, GB; AN 1995-133340 XP002426054 & HU 67 355 A (LAMPART VEGYIPARI GEPGYARTO ES FORGALMAZ) 28 March 1995 (1995-03-28)

## Description

The present invention relates to a method for forming a permanent mechanical joint of surfaces by means of an electrically non-conducting substance. In particular, the present invention relates to a method for establishing an electrically non-conducting permanent mechanical joint between surfaces, wherein optionally at least one of the surfaces exhibits electrically conducting properties.

The demand for live elements, i.e. active elements to be combined/joined with each other and/or with further mechanical elements (e.g. carrier means, support means, handles, etc.) in a permanent as well as electrically insulated manner emerges in a great many fields of our everyday life. This demand is satisfied for example by the electric circuits and switches mounted onto ceramic plates, wherein the contact pieces effecting the switching and the breaking are formed by members anchored mechanically onto ceramics or plastics (bakelite). For example, electric motor commutators obey a similar construction concept; the commutator segments are embedded in a plastic material and hence they are electrically insulated from each other and from the electric motor's shaft, and at the same time they are mechanically affixed, too. The double insulation system of electrical appliances leading to an increased safety is also well known; here live active elements (coils, switches) of the appliances are provided with a casing when mechanically affixed onto an insulating plate. Consequently, the active elements of the appliance are in mechanical connection with the casing solely through the insulating material; during a regular operation no electric coupling takes place between the casing and the active elements.

The traditional construction of induction machines obey similar concepts. Here, the coils are wound generally on bobbins made of organic insulating materials and these bobbins are affixed mechanically to the cores. According to a further possibility, an insulating coating is applied to the cores and the coils are directly formed on the coating. Generally, the bobbins and the coatings are made of plastics, synthetic resins, eg. bakelite or prespahn, varnish, etc., or in case of heavy-duty equipments mica, ceramics or reinforced-fibre plastics. In general, the electrical wires are directly affixed neither to each other nor to the mechanical parts. This can cause excitation noise, wire displacement, friction or breakdown. Those solutions are much more preferred, wherein the mechanical anchorage of the electrical conductors also provides an electrical insulation of the conductors from each other or from further mechanical components via the anchoring material applied. Such a solution is disclosed in eg. U.S. Pat. No. 5,920,141, wherein the commutator segments are mechanically anchored via being slipped into a profiled channel made of bakelite, and the segments are electrically insulated from each other by the wall of the channel. Printed armatures constitute similar solutions, wherein the electrical conducting element is bonded onto a substrate made of organic insulating materials. For example, U.S. Pat. No. 4,927,742 teaches a multilayered conducting element bonded onto a substrate into epoxy resin. Furthermore, U.S. Pat. Nos. 5,644,183 and 5,789,841 disclose such solutions, wherein a conducting network is formed on both sides of a substrate sheet made of an insulating material by means of cutting out the conductors from a metallic sheet and then bonding them onto the substrate, and/or through etching an electrical conducting layer previously arranged on the substrate sheet. Furthermore, U.S. Pat. No. 4,774,279 discloses a process for combining/joining a copper conducting layer with a surface of a plastic substrate in a permanent way, and also bonding materials suitable for the establishment of such mechanical joints. A common drawback of the cited solutions is that the mechanical anchorage and the electrical insulation always take place through the usage of an organic or an organic based substance, and hence the mechanical and dielectric strengths of the joint obtained are highly limited. Moreover, the heat resistance of the joints formed in this way is relatively low.

The soldering process of metallic conducting layers onto insulators made of ceramics is also known from literature; such a process is the so-called "direct-bonded copper" joining technique used for joining copper to a ceramic substrate, as disclosed in eg. U.S. Pat. No. 6,404,065, or the ceramic-metal joint achieved by a process in accordance with U.S. Pat. No. 6,815,086, wherein the joint itself is formed by the heat generated in the chemical reaction of the layers forming the bonding material. The ceramic-metal joining techniques concerned are mainly used in the field of semiconductor fabrication, although the underlying concepts are also governing when a joint of this type is to be formed. As a consequence of breakage hazard due to the relatively great difference between the thermal expansion coefficient of the metal and that of the ceramics, the metal-ceramic joints of this kind are reliable only in a narrow temperature range, even if small geometrical sizes are considered as it is usual in the field of semiconductor fabrication. The joining process taught by U.S. Pat. No. 6,605,868 tries to reduce this latter problem through the application of a double ceramic layer and an intermediate layer, however, this increases considerably the cost price of a single joint due to the increase in the expenditure of material and the need of multiple layer formation. A common drawback of the metal-ceramic joining processes exemplified here is that only conducting systems of small sizes (that is extending to a small area) joined mechanically with the insulating material can be achieved reliably and for a long-lasting usage due to the inelasticity of the ceramic substrates. If such a conducting system should extend to a relatively large area, as eg. in case of certain components of traditional electrical machines, there is a need for making use of substrates with higher elasticity than that of ceramic substrates. At the same time, the substrates of higher elasticity, due to their structural build-up, exhibit significantly lower thermal ratings relative to that of ceramics. In the field of electric machine fabrication, neither a joining process for preparing a conducting system joined with an insulating substance that has a high thermal rating (that is, being resistant to high operating temperatures) and at the same time extends to a large surface area (that is, being applicable in appliances of large dimensions), nor a bonding material suitable for establishing the joint is known.

A similar problem emerges in respect of the cores of the induction machines. It is well-known that said cores are produced generally with a laminated structure, in the form of bundles of iron plates. Relative to these, cores made of ferrite or iron powder exhibit more advantageous properties; ferrite cores do so, because they show no eddy current losses as their material does not conduct electrically at all, while the cores made of iron powder do so, as the relatively small surface areas of the tiny iron grains contacting each other in such cores form a large electric resistance to the eddy currents. Ferrites, however, are very bad heat conductors and also brittle, thence they are merely used to prepare cores of small sizes. In case of cores made of iron powders the following difficulty emerges: if they are pressed with a loose structure and heat treated at low temperatures, they remain brittle, if, however, they are pressed to a high density and sintered at high temperatures, the cores will show the good mechanical and the worse magnetic properties of bulky iron, while their core losses are also gradually increasing. To avoid this duality, a great many solutions are known, such as eg. the phosphatization of the surfaces of the iron grains in a thickness of 50 to 100 nm as taught by U.S. Pat. No. 6,348,265 or the chromate treatment of said surfaces in accordance with U.S. Pat. No. 6,419,877 for increasing the transition resistance among the iron grains contacting each other. The core's internal resistance can also be increased by mixing a ferrosilicate powder to the iron powder before pressing it, as it is disclosed in U.S. Pat. No. 4,585,480. In this way, the eddy current within the core must go round the ferrosilicate grains having a low electric conductivity, hence its current path becomes longer, as a result of which the grains at issue represent higher resistance. Moreover, the silicone content of the iron, as a side effect, increases the magnetic susceptibility of the iron powder.

Besides these techniques, various lubricants, mainly metal-stearates, facilitating the pressing are widely used. These form a coating over the grains of the iron powder and hence result in electrical insulation of the individual grains. The heat stability of the grain coatings obtained in this manner, however, falls far behind the temperature required by sintering in order to achieve an iron core of suitable mechanical strength. Thus in such cases a choice should be made between sintering effected at low temperatures, whereby the insulating material between the grains is preserved and low mechanical strength is achieved, and sintering carried out at higher temperatures that results in higher mechanical strengths of the core fabricated, but the grain coatings suffer thermal decomposition and the insulations between the individual grains of the iron powder provided by the coatings themselves simply disappear. Either possibility is decided upon, one should arrive at a compromise in respect of the mechanical strength of the core and the disadvantageous properties arising from its behaviour as dense iron, instead of exploiting the advantages arising from said properties to the fullest possible extent.

Furthermore, when cores made of iron powder are fabricated, various epoxy-based coatings and bonding materials are widely used for coating the iron powder grains. As far as both the mechanical strength and the operational temperature are concerned, the applicability of these substances are, however, strictly limited.

Japanese Publ. Pat. Appl. No. JP-57111366 discloses an electrically conductive adhesive obtained by incorporating electrically conducting particles of a first particle size and insulating spacer particles of a second particle size in a specific ratio into an insulating base adhesive, wherein the second particle size is greater than the particle first size. The electrically conducting particles are incorporated into the base adhesive in such a proportion that when the adhesive is cured in an unpressed state, it exhibits insulating properties in all directions. When, however, the adhesive is cured under compression, it exhibits electrical conductivity in the direction of compression, but remains insulating in other directions. The electrically conductive adhesive can be applied between metallic terminal blocks.

Hungarian Pat. No. 212,915 B1 discloses mill mixes comprising various fritter materials in given amounts for the preparation of a ground enamel powder. Said powder is used to coat metallic surfaces of objects.

U.S. Pat. No. 4,090,881 teaches a high-temperature non-conducting inorganic refractory adhesive suitable for use in conjunction with various substances, including conducting elements metallic in nature. Said refractory adhesive comprises mullite, a crystalline compound of alumina and silica, and alumina, ceramic fibres, colloidal silica as well as a clay suspension agent as binding agent. The high-temperature electrical insulating properties are attributed to the fact that constituents, such as zirconia, are absent. Moreover, it is also clearly stated that compounds containing zirconia in any form, as well as mixtures of alumina and chromium oxide or vanadium oxide should not be present either if the refractory adhesive is to be used as a high-temperature adhesive.

In view of the above, it is apparent that a great number of processes and/or bonding materials are known in literature to combine/join surfaces of various properties, optionally being electrically conducting, in particular metallic, with each other in an electrically insulating and also a mechanically permanent manner. It is also clear, that none of the known processes results in a joint that would satisfy the prescribed requirements for example in case of electrical machines with respect to both mechanical strength and thermal rating, and furthermore would function reliably also at high temperatures, i.e. would join surfaces firmly.

The aim of the present invention is to develop a joining method for forming permanent mechanical joint of two or more surfaces that, in case of need, electrically insulates said surfaces from each other, and the joint itself is durable and does not degrade and/or loses its insulating capability even at high temperatures. A further aim of the present invention is to provide a joining method which ensures that a joint created by the method (besides its insulating property) is resistant to crack propagation. Further aims to be achieved by the present invention will be apparent from the specification discussing possible embodiments of the invention.

The aimed objects are achieved through the method according to Claim 1. Possible further embodiments thereof are defined by dependent Claims 2 to 13.

In one embodiment of the method according to the present invention the bonding material prepared as a mixture of a first and a second component is applied to at least one of the surfaces to be joined via, in case of need electrically insulating joints. Here, the enamel or the heat-resistant cement constituting the first component should be chosen to be compatible with at least one of the surfaces to be joined. As a consequence of baking, a firm mechanical joint forms in a known manner from the bonding material between the surfaces to be joined and the first component of the bonding material. The second component of the bonding material, that is the grains, also present within the thus obtained joint between the surfaces serves on the one hand to maintain the joined surfaces at a given distance, which is essentially defined by the grain size, and thereby to ensure the expected dielectric strength, and on the other hand to form a phase boundary/obstacle in the path of the microcrackings occasionally appearing within the volume of the joint and propagating away and thereby to enhance the crack propagation resistance of the joint.

In a further embodiment of the method according to the invention, a bonding material is applied to all surfaces to be joined. Here, the enamel or the heat-resistant cement constituting the first component of the bonding materials applied to each of the surfaces is chosen to be compatible with the surface onto which it is applied. As a consequence of baking, a firm mechanical joint forms from the bonding materials between the surface and the first component of the respective bonding material on each of the surfaces. Furthermore, due to mixing and diffusion taking place between the molten first components, a continuous transitional interface boundary layer also forms. This interface layer on the one hand firmly joins the layers formed from the molten first components, and on the other hand compensates for the mechanical stresses induced by the discrepancy of the substances used. The second component of the bonding material, that is the grains themselves, also present within the thus obtained joint between the surfaces serves again on the one hand to ensure the expected dielectric strength, and on the other hand to enhance the crack propagation resistance of the joint. Besides this, the grains that are embedded in the vicinity of the boundary layer or extend in the full thickness of the boundary layer and also project over it significantly enhance the interlaminar bond strength between the layers formed from the first components. The thickness of the boundary layer is determined basically by the diffusion coefficients of the first components and the baking time.

The total thickness of a joint established between the surfaces is generally 0.05 to 0.25 mm, typically 0.1 to 0.2 mm. The size of the grains, if desired, also added to this is generally 5 to 150 µm, typically 10 to 100 µm. The largest dimension of the grains used is determined by the rated dielectric strength. Said ranges for the grain size provide a dielectric strength of at least about 800 to 1,000 V between electrically conducting surfaces permanently joined through the joint concerned. It is noted here, that as far as a decrease in the crack propagation is concerned, smaller grain sizes are preferred. Consequently, the grain size distribution of the grains constituting the second component of the bonding material is optimised in order to simultaneously maximalize both the dielectric strength and the crack propagation resistance of the joint. During our investigations it was found that to simultaneously maximalize both of said two properties, at most 20%, preferably at most 10% of all the added grains may fall within the vicinity of the upper limit of the above defined ranges, that is may exceed eight and nine tenths, respectively, of the upper limits concerned. The rest of the grains, in respect of the size, typically falls in the vicinity of the given lower limits.

If the enamels or heat-resistant cements constituting the first components applied to the surfaces were incompatible with each other, which appears for example due to a chemical reaction taking place at the baking temperature between them or due to a large difference between their thermal expansion coefficients, a further substance can be arranged between said materials. This substance is preferentially provided as a further enamel or heat-resistant cement layer compatible with the layers limiting it or as a foil, preferably a metal foil compatible with the layers limiting it.

The smaller the surfaces to be joined are, the smaller the portion of the large-sized grains is and/or the large-sized grains itself are.

The baking itself is carried out at the melting point of the bonding material(s) applied to the surface(s) to be joined, or at a temperature slightly exceeding said melting point, but not reaching the melting point of the second component Depending on composition of the first component(s) of the bonding material(s), the baking temperature is typically 500 to 1,000 degree Celsius. During baking, there is no need to make use of a protective atmosphere, the baking can be effected at an arbitrary pressure. The time of soaking within the baking is typically 1 to 5 minutes, preferably 1 to 2 minutes after having reached the baking temperature. Naturally, the time of soaking highly depends on the spatial dimensions of the joint to be established: a joint with a larger size requires the application of a longer time of soaking.

In what follows the invention is discussed in more detail with reference to the attached drawings, wherein
- Figure 1 shows a front commutator in a partially broken perspective view that is obtained by combining a commutator body made of steel and a segmental body made of copper by means of the method according to the invention;
- Figure 2A illustrates a cylindrical commutator in a partially broken perspective view that is obtained by combining a commutator hub made of steel and a segmental body made of copper by means of the method according to the invention;
- Figure 2B is the enlarged view of the structure of a joint region of the commutator shown in Figure 2A; and
- Figure 3 illustrates a motor stator core obtained from iron powder by means of pressing and baking via the joining method according to the invention, wherein the structure of the core's first (a) bulk region and second (b) surface region is also illustrated in separate enlarged views.

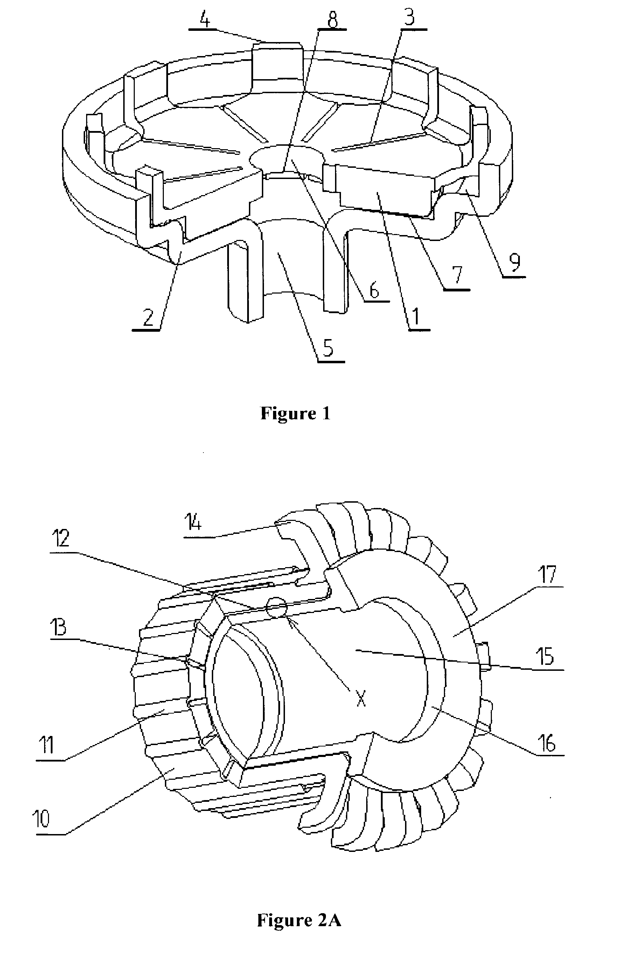

Referring now to Figure 1, an application of the method according to the invention for establishing an electrically insulated permanent mechanical joint between two surfaces made of iron (steel) and copper is discussed with reference to an example falling into the field of electric machine fabrication, namely to the production of a front commutator. The front commutator shown in Figure 1 is prepared by joining a commutator body 2 and a segmental body 1 permanently in an electrically insulating manner. The commutator body 2 is preferentially formed from a deep-drawn steel plate, its inner surface 9, except for its hub bore 5, is coated with a bonding material required for establishing the joint and having been applied as an aqueous suspension that has been dried. The first component of the bonding material applied to the inner surface 9 is known *per se,* it is a so-called ground enamel powder disclosed eg. in Hungarian Pat. No. 212,915, while the second component thereof is provided by solid grains of an electrically non-conducting substance (for example aluminum oxide, zirconia, tungsten carbide, silica, etc.), preferably of aluminum oxide, that has a higher melting point than the melting point of the ground enamel powder, is soluble in the ground enamel powder to a negligible extent but can be wetted by the first component. It is noted here, that a heat-resistant cement can also constitute the first component of the bonding material applied to the inner surface 9.

The segmental body 1 is provided as a single constructional unit made of copper that is divided by means of segmental slots 6 in a cylindrical symmetric manner and is continuous along its hub bore 6. The surface 7 of the segmental body 1 facing the commutator body 2 is also coated by a bonding material applied as an aqueous suspension that has been dried. Here, the bonding material applied to the surface 7 is provided by a transparent enamel powder having a composition that is known *per se* and containing no electrically non-conducting solid grains. The bonding material layers covering the inner surface 9 of the commutator body 2 and the surface 7 of the segmental body 1 will be baked in a few minutes and at a temperature of about 860 to 960 degree Celsius, besides a coaxially nested position of the hub bores 5, 6 wherein the hub bores 5, 6 are in mutual contact with each other through the bonding material layers applied.

After baking, the hub bore 6 is enlarged in the radial direction to the extent shown by a step bore 8, but at least to the segmental slots 3. As a result of this step, the segments defined by the segmental slots 3 become electrically disconnected from each other and the commutator body 2, however they are mechanically joined with the latter through the baked enamel layers. The submersion of the segmental body 1 in the enamel melt and its contact with the commutator body 2 during the baking step is hindered by the aluminum oxide grains suspended within the bonding material applied to the inner surface 9. The commutator lugs 4 of the electrical unit prepared by the joining method according to the invention from the commutator body 2 and the segmental body 1 form electrical contact pieces between the segments and the coils of an electric motor. In its built-in position, the front commutator obtained in accordance with the above is connected to the shaft of the electric motor through the hub bore 5.

Referring now to Figure 2A, an embodiment of the method according to the invention for fabricating a cylindrical commutator is outlined. The cylindrical commutator sketched in Figure 2A is prepared by means of joining a steel hub 17 provided with a hub bore 16 to a segmental body 10 made of copper in a permanent and electrically insulated manner. The hub bore 16 has a nominal diameter in the vicinity of the end surfaces. At the same time a cylindrical shell with a larger diameter constitutes the inner surface 15 of the hub bore 16. The segmental body 10 is divided into separate segments by means of grooves 13, before establishing the joints, connection ribs 11 preserve the segmental body 10 from falling into pieces. The segmental body 10 can be formed equally by cutting or via plastic deformation.

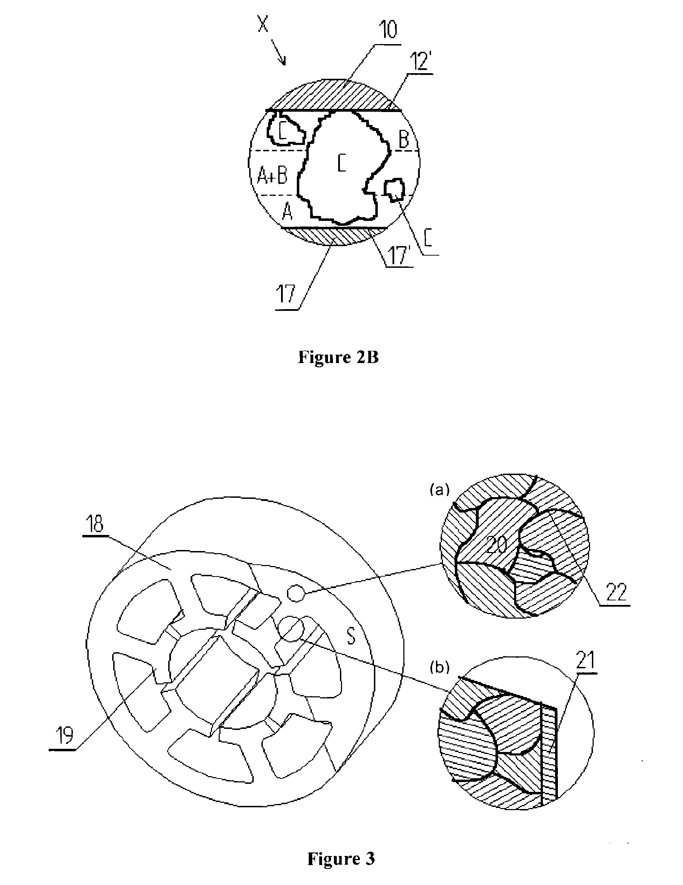

To establish a joint, on the one hand the outer surface 17' (see Figure 2B) of the steel hub 17 of the cylindrical commutator illustrated in Figure 2A is coated with the bonding material (formed as the mixture of a ground enamel powder or heat-resistant cement powder and the aluminum oxide grains) detailed earlier with reference to Figure 1, and on the other hand the bonding material comprising the known transparent enamel powder is applied to the inner surface 12' of the bore 12 of the segmental body 10 and to the surface (not shown in the drawings) of the contact pieces 14 that faces the steel hub 16. After applying the suitable bonding materials, the steel hub 17 is fitted into the bore 12 of the segmental body, the fitting clearance is preferably at most 10 to 50% of the total thickness of the bonding material layers. The baking itself takes place in this mutually nested position of the steel hub 17 and the segmental body 10 under the conditions discussed already in connection with Figure 1 in a way known *per se.* After the baking step, the connection ribs 11 are subjected to turning, whereby the segments become electrically disconnected from each other, however remain mechanically joined.

During baking a joining region X shown in Figure 2A builds up in the bonding material layers contacting each other, the structure of which is illustrated in Figure 2B in an enlarged view. The outer surface 17' of the steel hub 17 is covered by a ground enamel layer "A", similarly to the segmental body 10, the inner surface 12' of which is covered by a transparent enamel layer "B". The enamel layers "A" and "B" are connected by an interface boundary layer "A+B" that is formed from a blend of the two enamel layers via mixing and diffusion. Solid grains "C" hindering the contact of the segmental body 10 and the steel hub 17 when the enamel layers are melted are present in the enamel layers in a disperse distribution. The grains with the largest grain sizes among the grains "C" serve basically as spacers between the segmental body 10 and the steel hub 17. Grains "C" being embedded through the freezing and solidification of the enamel layers onto the grains increase the strength of the joint between the layers, and later on form obstacles for the microcrackings occasionally arising and propagating. Simultaneously, the solidified enamel layers "A" and "B" between the segmental body 10 and the steel hub 17 as well as the solidified interface boundary layer "A+B" form together an electrically insulating film.

It is noted here that heat producing electrical conductors can also be affixed, mechanically and in an electrically insulated manner, to heat transferring surfaces by means of this method. Due to the good thermal conductivity of the enamel constituting a part of the bonding material, the transfer of heat is more efficient than through conventional ceramic insulators. In this case the conducting surface affixed mechanically and insulated electrically by the enamel layers is not necessarily a metallic surface; it can also be formed from a non-metallic conductor, eg. carbon (graphite), silit, etc. Hence, heating elements of electrical heat producing equipments, such as household ovens, water boilers, etc. can be manufactured by the method according to the invention in such a manner that results in simpler, cheaper and more efficient final products relative to the traditional solutions.

In the present embodiment of the method according to the invention, if several surfaces are to be joined in a given geometrical arrangement, the surfaces are affixed to each other by means of auxiliary mechanical elements (in this case eg. by means of the connection ribs 11) at least for the period of applying the bonding material and the baking, and after the baking said auxiliary mechanical elements are removed in a suitable manner.

Referring now to Figure 3, the fabrication of the core 18 of a motor stator obtained from iron powder through pressing and baking accomplished by means of the method according to the invention is demonstrated. If the core 18 is cut along a plane S forming an angle with the centreline of the stator, it can be seen from the enlarged sectional diagrams (a) and (b) obtained that the iron grains 20 of the iron powder are covered by a bonding material layer, preferably by an inorganic enamel layer 22. Furthermore, the surface of the pole pieces 19 of the core 18, except that of the armature bore, is covered by a surface enamel layer 21. This latter coating enamel layer 21 is applied in the form of a paint via brushing, spraying or any other suitable application techniques after having pressed to form. The structures illustrated in diagrams (a) and (b) serve on the one hand for electrically insulating the iron grains 20 which build up the core 18 from each other, and on the other hand for mechanically joining them to such an extent that they form a single solid block.

The structures shown in the diagrams (a) and (b) of Figure 3 are created by the method according to the invention in such a way that the iron powder with a grain size of typically 10 to 100 µm is mixed in the amount of 0.05 to 5.0 weight%, preferably 0.1 to 3.0 weight% with the inorganic enamel powder that constitutes the bonding material alone (that is, with no addition of a second component) in this case. To facilitate a more complete mixing, the average grain size of the enamel powder used is chosen to be preferably 5 to 25% of the average grain size of the iron powder. The mixing can be accomplished by means of either a dry or a wet mixing, in the latter case with the addition of eg. a wetting agent that facilitates the pressing.

Subsequent processing of the thus obtained mixture of the iron powder and the bonding material can be effected in several ways. In a first version of the possible processing methods, at first the powder mixture is pressed to a form and then subjected to baking. Contrary to the conventionally applied soaking which takes place for a period of an hour in magnitude and at about 1,200 degree Celsius for iron powders, the baking step of the method according to the invention is preferably accomplished at the softening-melting temperature of the enamel powder present in the bonding material, that is, depending on the composition of the enamel powder particularly used at about 500 to 1,000 degree Celsius and typically for a period of 1 to 5 minutes. The discrepancy in the technological parameters comes from the fact that the mechanical strength of the core 18 having subjected to a heat treatment is to be reached with the joints formed by the fused bonding material between the surfaces of the iron grains 20 and not through the mutual diffuse bonds of the iron grains 20. The joints at issue also ensure the electrical insulation of the iron grains 20, as the bonding material, before its melting during the increase in temperature, on the one hand oxidizes the surfaces of the iron grains 20 to be joined, and on the other hand partially solves the grains. Consequently, the oxide grains (in this case eg. iron-oxide grains) - before melting - naturally appear in the bonding material that will hinder the electrical contacts between the iron grains 20 via keeping them apart from each other after the baking step. It should be noted that due to this process taking place naturally, there is no need for the addition of a grained substance to the bonding material as the second component.

A possible further version of the processing methods is based on the fact that under mechanical load the obtained powder mixture shows a liquid-like behaviour even at a temperature below the melting point. Exploiting this, embedding of the iron grains 20 into the enamel as well as fusing and joining of the surfaces of the iron grains 20 coated by the enamel constituting the bonding material can be induced by means of a simple hot-pressing by heating the powder mixture to the softening-melting temperature of the enamel used, with no need for the application of a subsequent baking.

In a yet possible further version of the processing methods, the powder mixture is injection-moulded. The injection-moulding is carried out with the powder mixture in a state of being heated to the softening temperature of its enamel content, and by the application of an afterpressure. This state is suitable for effecting the injection-moulding as under the mechanical load the powder mixture shows a liquid-like behaviour as far as its displacement, mixing and space filling are concerned. The application of the afterpressure is required to remove the residual gas pockets from between the iron grains 20, since according to our investigations the powder mixture at issue does not show a liquid-like behaviour as far as its compressibility is concerned.

Compared to the shrinkage arising due to the heat treatment in traditional powder metallurgy which can even reach a few percentages, if the last two versions of the processing methods are applied, the core 18 does not suffer geometrical changes of dimension when the shrinkage due to cooling is neglected. Consequently, cores of significantly higher geometrical precision can be produced by the method according to the invention with enhanced eddy current suppression and improved magnetic properties.

An enamel layer 21 with a lower melting point than that of the enamel layer 22 forming the joints of the iron grains 20 can be applied in a suitable manner to the outer surface of the core 18 (or to a portion thereof) fabricated by the various versions of the processing method. The function of the enamel layer 21 thus applied is to provide a suitable electrical insulation (that is, dielectric strength) between the winding arranged on the core 18 and the core 18 when the core 18 is fitted into an electric machine. If desired, further circuit components can also be affixed onto the enamel layer 21 by means of the method according to the invention.

By means of the cold-pressing version of the processing method pressed workpieces with relatively low mechanical strength can be obtained, as a result of which the workpieces corresponding to more complex geometrical shapes break into pieces when they are removed from the press die, or after that. A further advantage of the last two versions of the processing methods (hot-pressing, injection-moulding) discussed earlier is that the workpieces of such complex shape can also be produced in a simple manner and with no problems.

## Claims

1. A method for forming a permanent mechanical joint between surfaces by means of an electrically non-conducting substance, comprising the steps of
- providing at least two surfaces to be joined in a permanent mechanical manner, said surfaces being electrically conducting surfaces (7, 9; 12', 17');
- applying a bonding material to at least one of said surfaces (7, 9; 12', 17'), said bonding material comprising a first component and a second component in a disperse distribution, wherein the first component of the bonding material is chosen from the group of electrically non-conducting enamels and heat-resistant cements, said first component being compatible with the at least one surface (7, 9; 12', 17'), and wherein the second component of the bonding material is chosen from the group of electrically non-conducting grains having a given range of grain size and a melting point higher than that of the chosen first component, said grains being solvable to a negligible extent in the chosen first component at the melting point thereof and being also wettable by the chosen first component;
- preparing a structure by arranging said surfaces (7, 9; 12', 17') in an indirect contact with each other through the applied layer of the bonding material; and
- baking the obtained structure by heating it essentially to the melting point of the first component of the bonding material and maintaining it at the requisite temperature for a given period of time, whereby forming a joint of a given thickness between the surfaces (7, 9; 12', 17') from the bonding material with said grains getting embedded in the joint, wherein said joint is formed by a bonding layer extending along each of the surfaces (7, 9; 12', 17') and a continuous transitional interface boundary layer located between and bound to said bonding layers, each bonding layer providing a mechanical bond between the first component of the bonding material and the respective surface.

2. The method according to Claim 1, **characterized in that** the thickness of the layer of the joint between the surfaces (7, 9; 12', 17') is essentially determined by the upper limit for the range of grain size characteristic to the grains constituting the second component.

3. The method according to Claim 1 or 2, **characterized in that** the upper limit for the range of grain size characteristic to the grains is chosen in such a way that the joint formed between the electrically conducting surfaces provides a prescribed rated dielectric strength.

4. The method according to Claim 3, **characterized in that** the grain size distribution within the range of grain size is chosen in such a way that besides providing the prescribed rated dielectric strength, the resistance to crack propagation of said joint takes the highest possible value.

5. The method according to Claim 4, **characterized in that** the grain size of at most 20%, preferably at most 10% of the grains constituting the second component exceeds nine tenths of the upper limit for the range of grain size.

6. The method according to Claim 1, **characterized in that** said surfaces are provided by grain surfaces of the grains of a fine-grained electrically conducting substance, and the application of the bonding material to said surfaces is provided by mixing the fine-grained substance and the bonding material.

7. The method according to Claim 6, **characterized in that** said structure is prepared by cold-pressing of the fine-grained substance with the bonding material applied on to said grain surfaces to a given geometrical shape.

8. The method according to any of Claims 1 to 5, **characterized in that** the size of the grains constituting the second component is 5 to 150 µm, preferably 10 to 100 µm.

9. The method according to Claim 8, **characterized in that** the second component is chosen from the grains of aluminum oxide, zirconia, tungsten carbide and silica.

10. The method according to Claim 9, **characterized in that** during the preparation of said structure, the surfaces (7, 9; 12', 17') are kept in the indirect contacting position by making use of auxiliary elements, said auxiliary elements being removed after the baking.

11. The method according to any of Claims 1 to 10, **characterized in that** depending on the composition of the first component of the bonding material, baking is effected typically at a temperature ranging from 500 to 1,000 degree Celsius.

12. The method according to any of Claims 1 to 11, **characterized in that** depending on the thickness of the joint to be formed, maintaining at the requisite temperature is effected typically from 1 to 5 minutes.

13. The method according to any of Claims 1 to 12, **characterized in that** heating and maintaining at the requisite temperature are accomplished in a furnace or via induction heating.

## Patentansprüche

1. Verfahren zur Herstellung einer permanenten mechanischen Verbindung zwischen Oberflächen mittels einer elektrisch nichtleitenden Substanz, umfassend folgende Schritte:
- Bereitstellen von mindestens zwei auf permanente mechanische Weise zu verbindenden Oberflächen, wobei die Oberflächen elektrisch leitfähige Oberflächen (7, 9; 12', 17') sind;
- Aufbringen eines Verbindungsmaterials auf mindestens eine der Oberflächen (7, 9; 12', 17'), wobei das Verbindungsmaterial eine erste Komponente und eine zweite Komponente in einer dispersen Verteilung umfasst, wobei die erste Komponente des Verbindungsmaterials aus der Gruppe elektrisch nichtleitender Emails und hitzebeständiger Zemente ausgewählt wird, wobei die erste Komponente mit der mindestens einen Oberfläche (7, 9; 12', 17') kompatibel ist, und wobei die zweite Komponente des Verbindungsmaterials aus der Gruppe von elektrisch nichtleitenden Körnern mit einer in einem bestimmten Bereich liegenden Korngröße und einem Schmelzpunkt über jenem der ausgewählten ersten Komponente ausgewählt wird, wobei die Körner in der ausgewählten ersten Komponente auf deren Schmelzpunkt in einem geringfügigen Ausmaß lösbar sind und auch durch die ausgewählte erste Komponente benetzbar sind;
- Herstellen eines Gebildes, indem die Oberflächen (7, 9; 12', 17') durch die aufgebrachte Verbindungsmaterialschicht in indirektem Kontakt mit einander angeordnet werden; und
- Brennen des hergestellten Gebildes durch Erhitzen desselben im Wesentlichen auf den Schmelzpunkt der ersten Komponente des Verbindungsmaterials und Halten desselben auf der erforderlichen Temperatur während eines bestimmten Zeitraums, wodurch aus dem Verbindungsmaterial eine Verbindung mit einer bestimmten Dicke zwischen den Oberflächen (7, 9; 12', 17') hergestellt wird, wobei die Körner in die Verbindung eingebettet werden, wobei die Verbindung durch eine Verbindungsschicht, die sich entlang jeder der Oberflächen (7, 9; 12', 17') erstreckt, und eine durchgehende Übergangs-Zwischen-Grenzschicht, die zwischen den Verbindungsschichten angeordnet und mit diesen verbunden ist, gebildet wird, wobei jede Verbindungsschicht eine mechanische Verbindung zwischen der ersten Komponente des Verbindungsmaterials u n d der entsprechenden Oberfläche vorsieht.

2. Verfahren nach Anspruch 1, **dadurch gekennzeichnet, dass** die Dicke der Schicht der Verbindung zwischen den Oberflächen (7, 9; 12', 17') im Wesentlichen durch die Obergrenze des Korngrößenbereichs der die zweite Komponente bildenden Körner bestimmt wird.

3. Verfahren nach Anspruch 1 oder 2, **dadurch gekennzeichnet, dass** die Obergrenze des Korngrößenbereichs der Körner derart gewählt wird, dass die zwischen den elektrisch leitfähigen Oberflächen hergestellte Verbindung eine vorgeschriebene Nenndurchschlagfestigkeit vorsieht.

4. Verfahren nach Anspruch 3, **dadurch gekennzeichnet, dass** die Korngrößenverteilung innerhalb des Korngrößenbereichs derart gewählt wird, dass neben dem Vorsehen der vorgeschriebenen Nenndurchschlagfestigkeit der Widerstand gegen Rissausbreitung der Verbindung den höchstmöglichen Wert erreicht.

5. Verfahren nach Anspruch 4, **dadurch gekennzeichnet, dass** die Korngröße von höchstens 20%, vorzugsweise von höchstens 10%, der die zweite Komponente bildenden Körner neun Zehntel der Obergrenze des Korngrößenbereichs überschreitet.

6. Verfahren nach Anspruch 1, **dadurch gekennzeichnet, dass** die Oberflächen durch Kornoberflächen der Körner einer feinkörnigen elektrisch leitfähigen Substanz bereitgestellt werden und das Aufbringen des Verbindungsmaterials auf die Oberflächen durch Mischen der feinkörnigen Substanz und des Verbindungsmaterials realisiert wird.

7. Verfahren nach Anspruch 6, **dadurch gekennzeichnet, dass** das Gebilde durch Kaltpressen der feinkörnigen Substanz, mit auf die Kornoberflächen aufgebrachtem Verbindungsmaterial, zu einer bestimmten geometrischen Form hergestellt wird.

8. Verfahren nach einem beliebigen der Ansprüche 1 bis 5, **dadurch gekennzeichnet, dass** die Größe der die zweite Komponente bildenden Körner 5 bis 150 µm, vorzugsweise 10 bis 100 µm, beträgt.

9. Verfahren nach Anspruch 8, **dadurch gekennzeichnet, dass** die zweite Komponente aus Körnern aus Aluminiumoxid, Zirconiumdioxid, Wolframcarbid und Siliciumdioxid ausgewählt wird.

10. Verfahren nach Anspruch 9, **dadurch gekennzeichnet, dass** während der Herstellung des Gebildes die Oberflächen (7, 9; 12', 17') durch Verwendung von Hilfselementen in der indirekten Kontaktposition gehalten werden, wobei die Hilfselemente nach dem Brennen entfernt werden.

11. Verfahren nach einem beliebigen der Ansprüche 1 bis 10, **dadurch gekennzeichnet, dass** je nach Zusammensetzung der ersten Komponente des Verbindungsmaterials Brennen für gewöhnlich bei einer Temperatur im Bereich von 500 bis 1000 Grad Celsius durchgeführt wird.

12. Verfahren nach einem beliebigen der Ansprüche 1 bis 11, **dadurch gekennzeichnet, dass** je nach Dicke der herzustellenden Verbindung das Halten auf der erforderlichen Temperatur für gewöhnlich 1 bis 5 Minuten lang durchgeführt wird.

13. Verfahren nach einem beliebigen der Ansprüche 1 bis 12, **dadurch gekennzeichnet, dass** das Erhitzen und Halten auf der erforderlichen Temperatur in einem Ofen oder mittels induktivem Erhitzen durchgeführt werden.

## Revendications

1. Procédé de fabrication d'une jonction mécanique permanente entre des surfaces au moyen d'une substance électriquement non-conductrice, comprenant les étapes de
- prendre au moins deux surfaces à assembler d'une manière mécanique permanente, lesdites surfaces étant des surfaces électriquement conductrices (7, 9 ; 12', 17') ;
- appliquer un matériau de liaison sur au moins une desdites surfaces (7, 9 ; 12', 17'), ledit matériau de liaison comprenant un premier composant et un second composant en distribution dispersée, dans lequel le premier composant du matériau de liaison est choisi dans le groupe des émaux électriquement non-conducteurs et des ciments thermorésistants, ledit premier composant étant compatible avec l'au moins une surface (7, 9 ; 12', 17'), et dans lequel le second composant du matériau de liaison est choisi dans le groupe des grains électriquement non-conducteurs appartenant à une plage donnée de granulométrie et ayant un point de fusion plus élevé que celui du premier composant choisi, lesdits grains étant solubles dans une mesure négligeable dans le premier composant choisi au point de fusion de celui-ci et étant également mouillables par le premier composant choisi ;
- préparer une structure en disposant lesdites surfaces (7, 9 ; 12', 17') en contact indirect l'une (les unes) avec l'autre (les autres) par l'intermédiaire de la couche du matériau de liaison appliqué ; et
- cuire la structure obtenue en la chauffant sensiblement au point de fusion du premier composant du matériau de liaison et en la maintenant à la température requise pendant une période de temps donnée, formant ainsi une jonction d'une épaisseur donnée entre les surfaces (7, 9 ; 12', 17') à partir du matériau de liaison avec lesdits grains qui sont noyés dans la jonction, dans lequel ladite jonction est formée par une couche de liaison s'étendant le long de chacune des surfaces (7, 9 ; 12', 17') et une couche limite d'interface intermédiaire continue située entre lesdites couches de liaison et liée à celles-ci, chaque couche de liaison fournissant une liaison mécanique entre le premier composant du matériau de liaison et la surface respective.

2. Procédé selon la revendication 1, **caractérisé en ce que** l'épaisseur de la couche de la jonction entre les surfaces (7, 9 ; 12', 17') est essentiellement déterminée par la limite supérieure de la plage de granulométrie caractéristique des grains qui constituent le second composant.

3. Procédé selon la revendication 1 ou 2, **caractérisé en ce que** la limite supérieure de la plage de granulométrie caractéristique des grains est choisie de manière à ce que la jonction formée entre les surfaces électriquement conductrices présente une résistance diélectrique nominale prescrite.

4. Procédé selon la revendication 3, **caractérisé en ce que** la distribution granulométrique à l'intérieur de la plage de granulométrie est choisie de manière à ce que, outre l'existence de la résistance diélectrique nominale prescrite, la résistance à la propagation des fissures de ladite jonction prenne la valeur la plus élevée possible.

5. Procédé selon la revendication 4, **caractérisé en ce que** la granulométrie d'au plus 20%, de préférence d'au plus 10%, des grains constituant le second composant dépasse neuf dixièmes de la limite supérieure de la plage de granulométrie.

6. Procédé selon la revendication 1, **caractérisé en ce que** lesdites surfaces sont fournies par des surfaces de grain des grains d'une substance électriquement conductrice à granulométrie fine et l'application du matériau de liaison sur lesdites surfaces s'effectue en mélangeant la substance à granulométrie fine et le matériau de liaison.

7. Procédé selon la revendication 6, **caractérisé en ce que** ladite structure est préparée en comprimant à froid la substance à granulométrie fine avec le matériau de liaison appliqué sur lesdites surfaces de grain de manière à obtenir une forme géométrique donnée.

8. Procédé selon l'une quelconque des revendications 1 à 5, **caractérisé en ce que** la taille des grains constituant le second composant est comprise entre 5 et 150 µm, de préférence entre 10 et 100 µm.

9. Procédé selon la revendication 8, **caractérisé en ce que** le second composant est choisi parmi les grains d'oxyde d'aluminium, de zirconium, de carbure de tungstène et de silice.

10. Procédé selon la revendication 9, **caractérisé en ce que**, pendant la préparation de ladite structure, les surfaces (7, 9 ; 12', 17') sont maintenues en position de contact indirect au moyen d'éléments auxiliaires, lesdits éléments auxiliaires étant retirés après la cuisson.

11. Procédé selon l'une quelconque des revendications 1 à 10, **caractérisé en ce que**, selon la composition du premier composant du matériau de liaison, la cuisson est typiquement réalisée, à une température comprise entre 500 et 1 000°C.

12. Procédé selon l'une quelconque des revendications 1 à 11, **caractérisé en ce que**, selon l'épaisseur de la jonction à former, le maintien à la température requise dure, de manière caractéristique, entre 1 et 5 minutes.

13. Procédé selon l'une quelconque des revendications 1 à 12, **caractérisé en ce que** le chauffage et le maintien à la température requise s'effectuent dans un four ou par chauffage par induction.
